# EUROPEAN PATENT SPECIFICATION

(11) **EP 2 413 419 B1**
(45) Date of publication and mention of the grant of the patent: **16.03.2016**
(21) Application number: 10756320.7
(22) Date of filing: 22.03.2010
(51) Int. Cl.: H01M 2/02, H01M 2/10

(54) **OUTER CASING MEMBER FOR PREVENTING ELECTRICITY LEAKAGE, AND BATTERY PACK FOR A VEHICLE COMPRISING SAME**
GEHÄUSEELEMENT ZUR VERHINDERUNG VON STROMLECKAGEN UND BATTERIEPACK FÜR EIN FAHRZEUG DAMIT
ELÉMENT DE BOÎTIER EXTÉRIEUR CONÇU POUR EMPÊCHER UNE FUITE D'ÉLECTRICITÉ ET BLOC-BATTERIE DESTINÉ À UN VÉHICULE COMPORTANT CET ÉLÉMENT DE BOÎTIER EXTÉRIEUR

(30) Priority: 24.03.2009 KR 20090024799
(43) Date of publication of application: 01.02.2012
(73) Proprietor: SK Innovation Co., Ltd., Seoul 110-110 (KR)
(72) Inventor: LEE, Hyeungjin, Seoul 110-110 (KR); OH, Jeonkeun, Seoul 150-934 (KR); LEE, Hyosung, Daejeon 305-762 (KR); KO, Donghyun, Daejeon 302-318 (KR); CHO, Hyun Woo, Seoul 138-220 (KR)
(74) Representative: Stolmár & Partner Patentanwälte PartG mbB
(86) International application number: PCT/KR2010/001747
(87) International publication number: WO 2010/110565

(56) References cited:
- EP-A1- 1 030 387
- EP-A1- 1 071 147
- JP-A- 2003 178 722
- JP-A- 2008 004 506
- JP-A- 2008 266 586
- KR-A- 20010 015 359
- US-A1- 2006 194 101
- DATABASE WPI Week 200835 Thomson Scientific, London, GB; AN 2008-F12218 XP002685535, -& JP 2008 004506 A (SONY CORP) 10 January 2008 (2008-01-10)

## Description

### [Technical Field]

The present invention relates to an exterior member having physical properties capable of suppressing an occurrence of electric leakage through input and output terminals under high humidity conditions and a vehicle battery pack having the same.

### [Background Art]

In general, unlike a primary battery, research into a secondary battery, which can be charged and discharged, has been actively conducted with the development of state-of-the-art fields such as digital cameras, cellular phones, notebook computers, hybrid cars, or the like. An example of the secondary battery may include a nickel-cadmium battery, a nickel-metal hydride battery, a nickel-hydrogen battery, a lithium secondary battery, or the like. Among others, the lithium secondary battery has operating voltage of 3.6 V or more and thus, has been used as a power supply for portable electronic devices. Alternatively, the lithium secondary batteries are connected in series and thus, have been used for a high-output hybrid car. The lithium secondary battery has operating voltage three times higher and more excellent characteristics in energy density per unit weight than the nickel-cadmium battery or the nickel-metal hydride battery and thus, the use of the lithium secondary battery has rapidly increased.

The lithium secondary battery may be manufactured in various types. An example of a representative type may include a cylinder type and a prismatic type that has been mainly used for a lithium-ion battery. A lithium polymer battery that has recently been in the limelight is manufactured as a pouched type having flexibility and thus, the shape of the lithium polymer battery is relatively free. In addition, the lithium polymer battery is excellent in stability and light in weight, which may result in promoting slimness and lightness of the portable electronic devices.

In the case of small mobile devices, one battery cell or a few battery cells per one device may be used. On the other hand, in the case of middle or large-sized devices such as a car, or the like, a middle or large-sized battery module configured by electrically connecting a plurality of battery cells may be used to meet the need for high output and large capacity.

A representative example of the middle or large-sixed battery module may include a battery pack used for a hybrid car, or the like. The battery pack is basically configured to include at least two side covers (end plates) joined to both side portions and a coupling member coupling and fixing the side covers in a state in which a plurality of unit battery cells are stacked, wherein the side covers include input and output terminals.

Meanwhile, as a material of the side cover provided in the battery pack for a car according to the related art, nylon, or the like, has been used in consideration of costs and formability. However, when good mechanical strength cannot be secured by using only the nylon, a mixture to which a glass fiber, or the like, is added, has been used so as to supplement the mechanical strength.

However, the amount of effort to remove a possibility of occurrence of electric leakage under high humidity conditions, such as condensation, or the like, by controlling physical properties of the exterior member provided in the battery pack for a car according to the related art, in detail, properties such as moisture content, electric conductivity, or the like, has been insufficient.

### [Disclosure]

### [Technical Problem]

The present inventors found that an output degradation phenomenon appears at the time of the occurrence of the electric leakage phenomenon through the input and output terminals of the side covers under high humidity conditions such as condensation, or the like, during performing various experiments on the vehicle battery pack. That is, when the performance of the battery is not actually degraded but the electric leakage phenomenon occurs at input and output terminal units of the side covers, the output degradation phenomenon of the battery pack appears.

Therefore, an object of the present invention is to provide an exterior member capable of suppressing occurrence of an electric leakage phenomenon through input and output terminals of side covers under high humidity conditions such as condensation, or the like.

Another object of the present invention is to provide a battery pack having excellent output characteristics by including an exterior member capable of suppressing an occurrence of an electric leakage phenomenon.

### [Technical Solution]

The present inventors found that the difference in the occurrence of electric leakage is caused under high humidity conditions according to physical properties of an exterior member according to claim 1 including input and output terminal units, that is, according to moisture content and electric conductivity characteristics under high humidity conditions and thus, a difference in output performance of a battery pack is caused, thereby completing the present invention.

Therefore, the present invention include physical properties capable of suppressing the occurrence of electric leakage through the input and output terminals under high humidity conditions. In detail, according to an exemplary embodiment of the present invention, there is provided an exterior member including input and output terminal units, wherein the exterior member is made of a polymer material having a moisture content of 7 wt% or less and electric conductivity of 30 S/cm or less when left for 30 days at a relative humidity of 80% or more.

The exterior member according to the exemplary embodiment of the present invention includes all the exterior members for electric and electronic components requiring electric leakage performance, including the input and output terminals, which may be side covers of a battery pack in the exemplary embodiment of the present invention.

In addition, the exemplary embodiment of the present invention provides the battery pack including the exterior member according to the present invention and in the exemplary embodiment of the present invention, the battery pack may be a battery pack for a hybrid car.

### [Advantageous Effects]

As set forth above, the exterior member according to the exemplary embodiments of the present invention can suppress the occurrence of the electric leakage phenomenon through the input and output terminals of the exterior member under high humidity conditions, such as condensation, or the like, and the vehicle battery pack having the exterior member can maintain the output characteristics without being degraded at the time of charging and discharging under the high humidity conditions.

### [Description of Drawings]

The above and other objects, features and advantages of the present invention will become apparent from the following description of preferred embodiments given in conjunction with the accompanying drawings, in which:

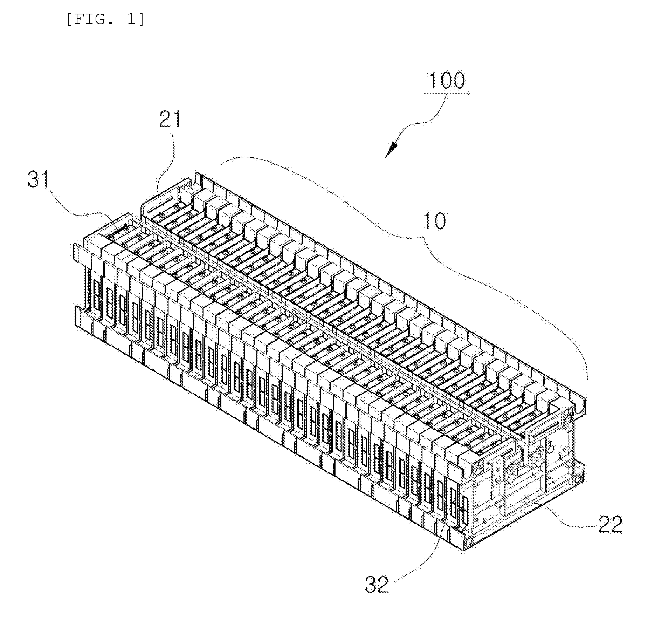

FIG. 1 is a perspective view of a battery pack for a hybrid car according to an exemplary embodiment of the present invention.

### [Best Mode]

Hereinafter, the present invention will be described in more detail with reference to the accompanying drawings. In this case, the technical terms and science terms used herein includes the meanings commonly understood in the related art by those having ordinary knowledge in the related art. In addition, when technical configurations and acting effects in the related art are considered to be overlapped with those of the present invention, the detailed description thereof will be omitted.

The present invention relates to an exterior member including input and output terminal units. The exterior member is made of a polymer material having a moisture content of 7 wt% or less and electric conductivity of 30 S/cm or less when the exterior member is left for 30 days at a relative humidity of 80% or more, such that the exterior member may suppress occurrence of electric leakage under high humidity conditions, for example, a relative humidity of 80% or more.

The moisture content is obtained by measuring a weight of the exterior member by molding a polymer material in the exterior member form and leaving the polymer material for 30 days in a range of a relative humidity of 80% or more and a saturated water vapor pressure condition, that is, a condensation condition and then, calculating a ratio of increased weight to the measured total weight by moisture weight.

Electric conductivity is a value measured by a general probe method after molding the polymer material in the exterior member form, forming input and output terminals in the exterior member, and leaving the polymer material for 30 days in the range of the relative humidity of 80% or more to the saturated water vapor pressure condition, that is, the condensation condition.

The present inventors found that an output degradation phenomenon is shown at the time of when the electric leakage phenomenon is generated through the input and output terminals of the side covers under high humidity conditions such as condensation, or the like, while performing various experiments on the vehicle battery pack. That is, when the performance of the battery is not actually degraded but the electric leakage phenomenon occurs at the input and output terminal units of the side covers, the output degradation phenomenon of the battery pack appears.

In addition, the present inventors confirmed that an electric leakage phenomenon is associated with the moisture content and the electric conductivity characteristics of the exterior member provided with the input and output terminals of the battery pack. That is, as described above, in the case of using the exterior member satisfying the conditions such as a moisture content of 7 wt% or less, electric conductivity of 30S/cm or less, or the like, when left for 30 days under the relative humidity of 80% or more, it can prevent degradation in output or deterioration in specific cells due to electric leakage under high humidity conditions. The lower the moisture content and the electric conductivity characteristics, or the like, the better the electric leakage preventing characteristics become. As a result, the lowest limit need not to be defined and the moisture content and electric conductivity may be maintained to be lowered according to a composition of polymer materials. When the exterior member is left for 30 days under the relative humidity of 80% or more, the moisture content may be controlled within a range of, in detail, 0.1 to 7 wt% and electric conductivity may be controlled within a range of 1 to 30 S/cm.

The polymer material forming the exterior member according to the exemplary embodiment of the present invention may be an organic polymer material alone or a mixture with an inorganic material and may include additives for controlling workability, mechanical strength, or the like, within a range satisfying the moisture content condition and the electric conductivity condition.

As an example of the polymer material satisfying the moisture content condition and the electric conductivity condition according to the exemplary embodiment of the present invention may include a polymer material including poly butylene terephthalate. More preferably, a mixture of poly butylene terephthalate and a glass fiber may be used. A mixing ratio of the poly butylene terephthalate A and the glass fiber B needs not to be limited, but a mixture thereof may be used so that a weight ratio A : B is in a range of 1 : 0.5 to 1.5. When the material in which the poly butylene terephthalate and the glass fiber are mixed in the range, which is used as the exterior member, is applied to the vehicle battery pack, the output degradation phenomenon may be more remarkably improved at the time of a high humidity condition leaving test.

In addition, the exemplary embodiment of the present invention provides a battery pack including the exterior member that is made of the polymer material having the moisture content of 7 wt% or less and electric conductivity of 30 S/cm or less when left for 30 days under the relative humidity of 80% or more and includes the input and output terminals. The battery pack may be the battery pack for the hybrid car. An example of the battery pack is shown in FIG. 1.

A battery pack 100 for a hybrid car shown in FIG. 1 may include a plurality of stacked cells 10, side covers 21 and 22 joined to both side portions of the stacked cells, and terminal units 31 and 32 formed on the side covers. Although not shown in detail in FIG. 1, the battery pack 100 may include a coupling member for coupling the plurality of stacked cells with the side covers, a connection member for connecting each stacked cell with the terminal units, and an upper protective cover, or the like.

The present invention will be described in detail with reference to the following exemplary embodiment. However, the following examples are only for illustrating the present invention and therefore, do not limit the scope of the present invention.

The present invention will be described in detail with reference to the following exemplary embodiment. However, the following examples are only for illustrating the present invention and therefore, do not limit the scope of the present invention.

### [Example 1]

As shown in the following Table 1, after the side covers for the battery pack were manufactured by using poly butylene terephthalate (PBT) (Maker: LG Chemical Co, Product Name: LUPOX GP1000H) alone or a mixture of 43 wt% of glass fiber (Maker: Saint Gobain Vetrotex, Product Name: SGVA910) and 57 wt% of PBT and were each left in water of normal temperature for 3 days, 7 days, 10 days, and 30 days, the moisture content was calculated by measuring the change in weight of the side covers.

In addition, after the terminals were mounted on the surfaces of the side covers and then, left in a chamber for 3 days, 7 days, 10 days, and 30 days under high humidity conditions (a temperature of 25 °C and a relative humidity of 90%), electric conductivity was measured.

In this case, the conductivity measurement method used the general probe method. In detail, after four electrodes were mounted at a predetermined interval and a predetermined current flowed in the four electrodes, electric conductivity was measured using a potential difference between two electrodes. In this case, the electric conductivity was measured using an equation of o = 1/2πS (1/V) (where σ: electric conductivity, S: interval between electrodes, V: potential difference).

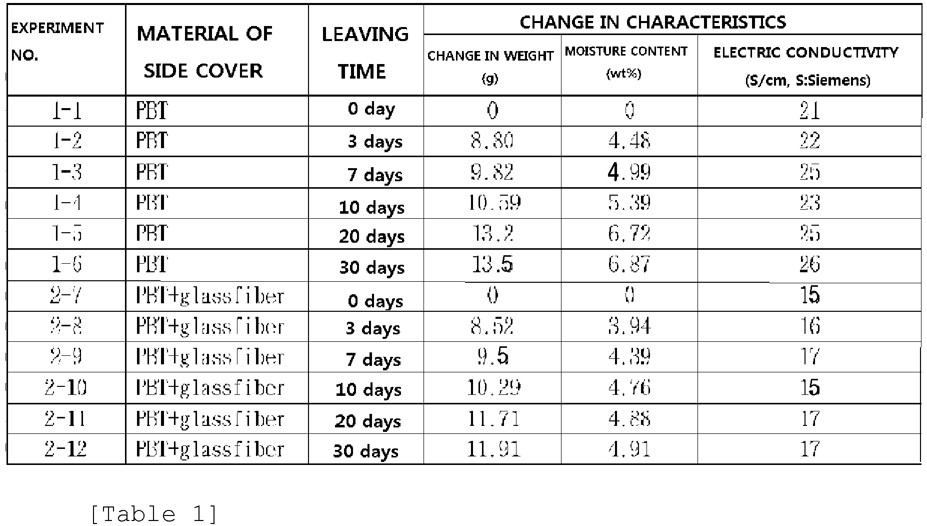

### [Comparative Example 1]

After the side covers for the battery pack were manufactured by mixing 57 wt% of polymer material and 43 wt% of glass fiber that are described in the following Table 2, the moisture content and electric conductivity were measured by the same method as Example 1. The polymer materials used in the following Table 2 are in detail as follows.
Nylon: Maker: Nylon Korea, Product Name: MC Nylon, Stretch Ratio: 20∼60%
PC (Polycarbonate): Maker: GE Polymer, Product Name: Lexan, Tensile Strength: 58.8∼68.8MPa
PVC (Poly vinyl chloride): Maker: LG Chemical Co., Product Name: LS050, Polymerization: 500±50
PMMA (Poly methyl methacrylate): Maker: LG MMA, Product Name: HP202, Mold Shrinkage: 0.2∼0.6
ABS (Acrylonitrile-Butadiene-Styrene): Maker: LG Chemical Co., Product Name: BM662B, Mold Shrinkage: 0.4∼0.8
PUR(Polyurethane): Maker: Polyurethane Korea, Product Name: KHL (G)-100, Density: 100±15
ST/Ac(Styrene acryl): Maker: Mitsui Chemical, Product Name: cpr300, Weight-average molecular weight: 50,000∼200,000
PS (Polystyrene): Maker: LG Chemical Co., Product Name: MI730, Mold Shrinkage: 0.4∼0.8

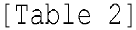

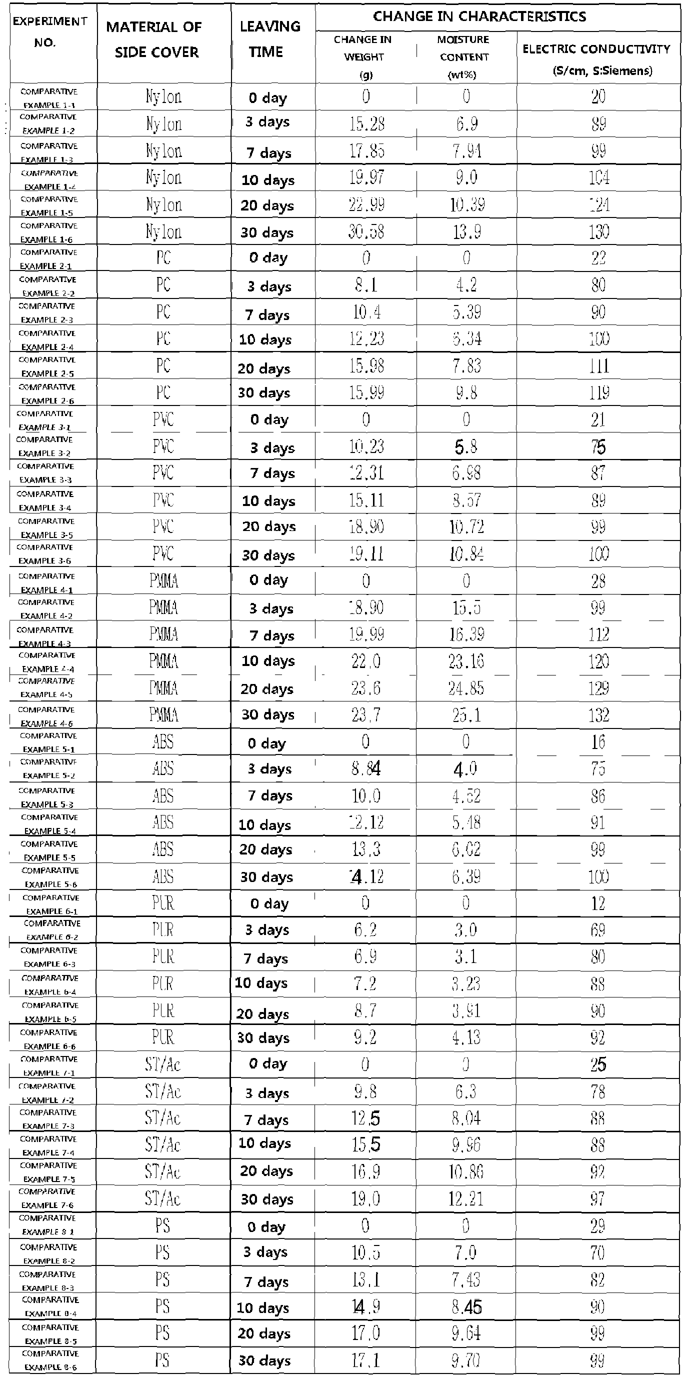

It could be appreciated from the above Example 1 and Comparative Example 1 that when the poly butylene terephthalate and the mixture of poly butylene terephthalate and the glass fiber were left in water for 30 days, they satisfied the conditions such as the moisture content of 7 wt% or less and electric conductivity of 30S/cm or less. In the case of the polyurethane or the Acrylonitrile-Butadiene-Styrene among several materials shown in Comparative Example 1, the moisture content was not high due to the characteristics of the materials but the electric conductivity characteristics exceeded 30 S/cm. In addition, in the case of polyurethane, the mechanical strength was too low and hard to be actually used. On the other hand, in the case of Acrylonitrile-Butadiene-Styrene, workability was too degraded and the price was high, such that Acrylonitrile-Butadiene-Styrene was realistically hard to use.

### [Example 2]

The battery pack for the hybrid car in which 72 cells were stacked as shown in FIG. 1 using the side covers manufactured in the above Example 1 was manufactured and the output from the entire pack directly connecting with the terminal units of the side covers was measured by performing the charging and discharging under high humidity conditions (temperature: 25°C; and the relative humidity: 90%). The charging and discharging test measured the output in a hybrid pulse power characterization (HPPC) pattern and measured open circuit voltage (OCV) at the time of full discharge after the measurement. The measured results were shown in the following Table 3.

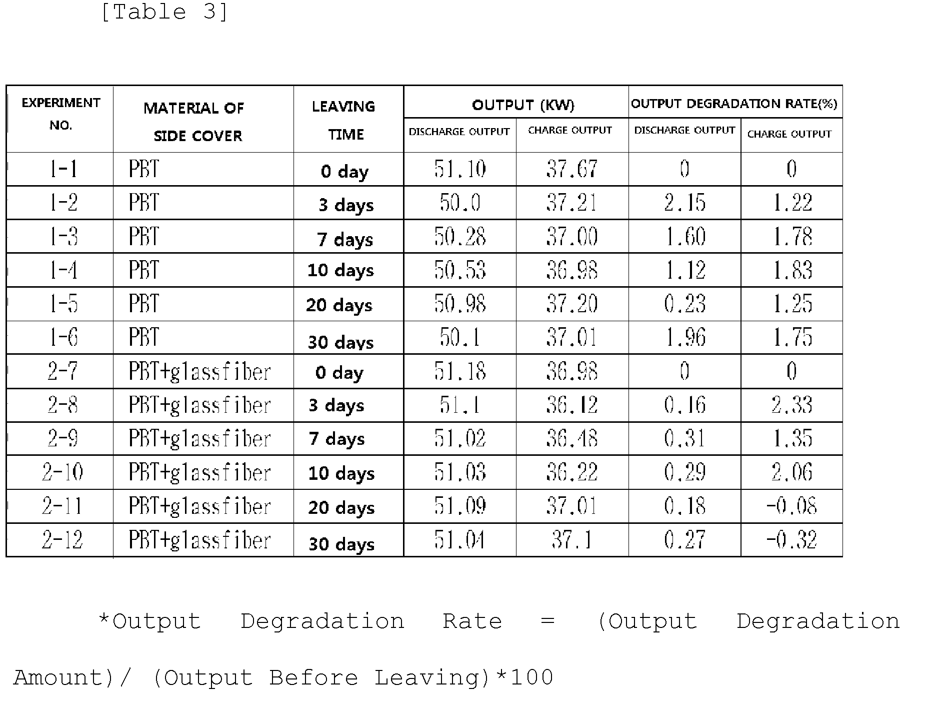

### [Comparative Example 2]

The battery pack for the hybrid car in which 72 cells were stacked as shown in FIG. 1 using the side covers manufactured in the above Comparative Example 1 was manufactured and the output characteristics from the battery pack were evaluated by the same method as Example 2. The evaluated results were shown in the following Table 4.

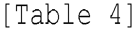

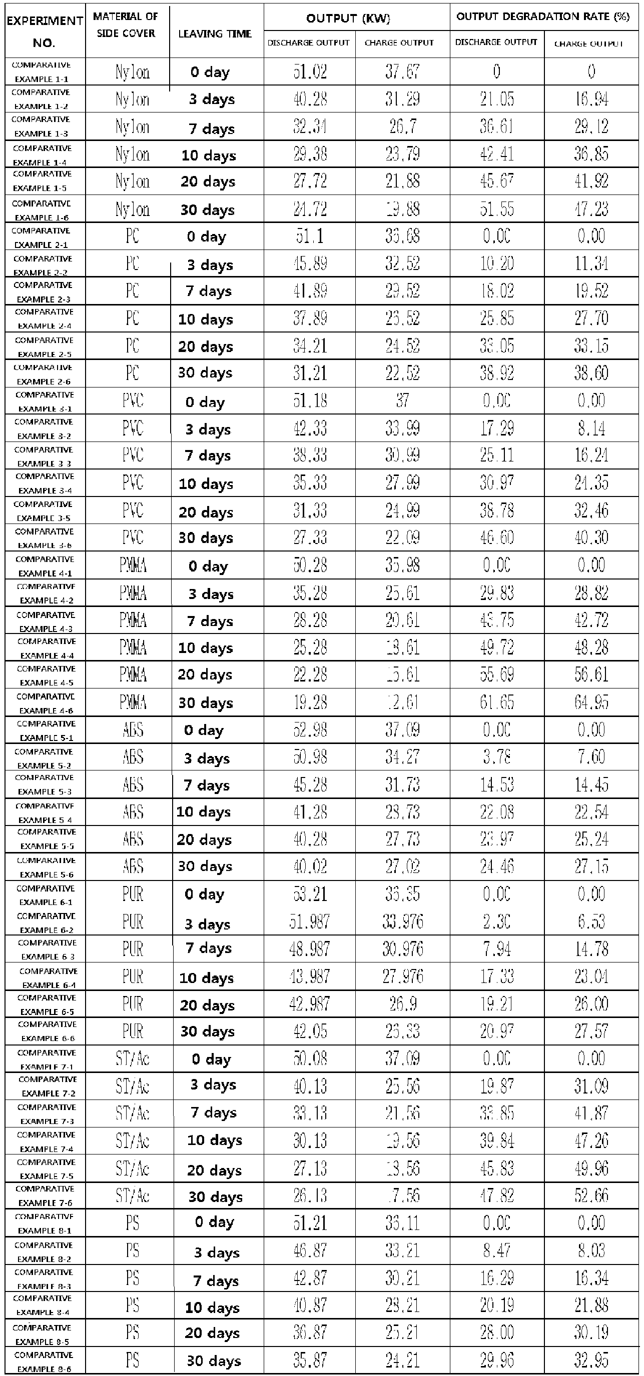

It could be appreciated from the above results that when the moisture content of the polymer material was originally maintained when left under high humidity conditions, the output degradation phenomenon did not occur under high humidity conditions and when the moisture content continued to increase, the output was reduced according to the left time. In addition, it could be appreciated that when electric conductivity was not increased according to the left time and was maintained at 30 S/cm or less, the output was not reduced.

Therefore, it could be appreciated that when the material of which the moisture content was maintained at 7 wt% or less and the electric conductivity was maintained at 30 S/cm or less at the time of being left up to 30 days under the high humidity conditions, the output degradation phenomenon did not occur under the high humidity conditions. It could be appreciated that the output degradation phenomenon occurred with the gradual passage of time even though the moisture content and electric conductivity were maintained at the initial time in other cases. In addition, in this case, in particular, in the case of the cells corresponding to the portions directly connecting to the terminal units, the voltage dropping phenomenon due to the electric leakage at the time of full discharge in addition to the overall output degradation phenomenon occurred. In this case, the cells at the specific positions were first deteriorated, which had a bad effect on the durability of the battery pack in the long term and when the voltage of the specific cells was excessively reduced in a low state of charge (SOC), cut off was caused in a battery management system (BMS) and as a result, the battery could not be normally operated.

### [Example 3]

After the side covers for the battery pack were manufactured by a mixture of 43 wt% of glass fiber (GF) (Maker: Saint Gobain Vetrotex, Product Name: SGVA910) and 57 wt% of poly butylene terephthalate (PBT) (Maker: LG Chemical Co., Product Name: LUPOX GP1000H) and each left for 3 days, 7 days, 10 days, and 30 days under. high humidity conditions (25 °C, RH 90%), the battery pack for the hybrid car for each of the side covers, in which 72 cells were stacked as shown in FIG. 1, was manufactured. The capacity of each of the battery packs was measured at 1 C rate and then, the voltage dropping phenomenon of the specific cells at the state of the full discharge was confirmed. The confirmed results were shown in the following Table 5. For the comparison, the evaluation was performed by the same method using the nylon (Maker: Nylon Korea, Product Name: MC nylon) instead of the PBT. In connection with the cell numbers, a cell adjacent to one side cover is denoted by No. 1 and a cell adjacent to the other side cover is denoted by No. 72.

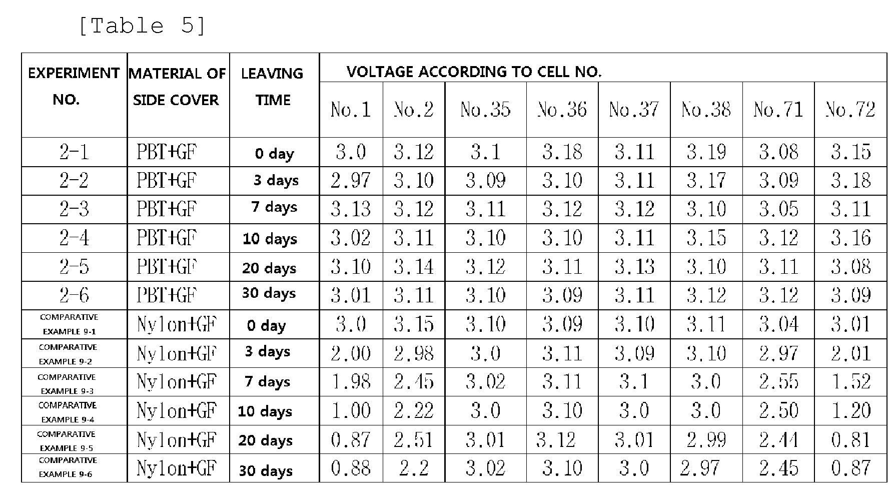

It could be appreciated from the results of the above Table 5 that in the case in which the side covers were manufactured by the nylon material used in the related art, the voltage dropping phenomenon appears at both ends and the middle portion of the pack of 72 cells and a portion in which the terminals are present when the side covers were left under high humidity conditions and different results were shown according to the leaving time. However, when using the materials according to the present invention, the deterioration phenomenon of the specific cells was not shown.

Describing synthetically the results of the Examples, it could be appreciated that the output degradation or the specific cell deterioration phenomenon due to the electric leakage under high-humidity conditions could be prevented in the case in which the materials of which the moisture content was maintained at 7 wt% or less and electric conductivity was maintained at 30 S/cm or less were selected at the time of being left under high humidity conditions, in selecting the materials of the side covers.

## Claims

1. An exterior member including input and output terminal units, wherein the exterior member is made of a polymer material containing a mixture of polybutylene terephthalate (A) and a glass fiber (B) having a weight ratio (A:B) in a range of 1:0.5 to 1.5,
wherein the polymer material having a moisture content of 7 wt% or less, and the moisture content is a ratio of increased weight to total weight measured when being left for 30 days at a relative humidity of 80% or more after molding the polymer material,
wherein the polymer material having an electric conductivity of 30 S/cm or less and the electric conductivity is a value measured by a probe method when being left for 30 days at a relative humidity of 80% or more after molding the polymer material and forming terminals.

2. The exterior member of claim 1, wherein the polymer material is formed by a mixture having 57 wt % of the polybutylene terephthalate and 43 wt % of the glass fiber.

3. A vehicle battery pack including the exterior member of claim 1.

## Patentansprüche

1. Ein Außenelement mit Input- und Output-Anschlusseinheiten, wobei das Außenelement aus einem Polymermaterial hergestellt ist, welches eine Mischung von Polyethylenterephtalat (A) und einer Glasfaser (B) mit einem Gewichtsverhältnis (A:B) in einem Bereich von 1:0,5 bis 1,5,
wobei das Polymermaterial einen Feuchtigkeitsgehalt von 7 Gew% oder weniger aufweist und der Feuchtigkeitsgehalt als Verhältnis des erhöhten Gewichts zu dem Gesamtgewicht gemessen wird, wenn es 30 Tage lang bei einer relativen Feuchtigkeit von 80% oder mehr nach dem Formen des Polymermaterials gelassen wird,
wobei das Polymermaterial mit einer elektrischen Leitfähigkeit von 30 S/cm oder weniger aufweist und die elektrische Leitfähigkeit durch ein Sonde-Verfahren gemessen wird, wenn es für 30 Tage bei einer relativen Feuchtigkeit von 80% oder mehr nach dem Formen des Polymermaterials und nach dem Formen der Anschlüsse gelassen wird.

2. Der Außenelement nach Anspruch 1, wobei das Polymermaterial aus einer Mischung von 57 Gew% Polybutylenterephthalat und 43 Gew% Glasfaser geformt ist.

3. Ein Fahrzeugbatteriepack umfassend das Außenelement nach Anspruch 1.

## Revendications

1. Un élément extérieur comprenant des unités terminales d'entrée et de sortie, dans lequel l'élément extérieur est réalisé en un matériau polymère contenant un mélange de téréphtalate de polybutylène (A) et une fibre de verre (B) ayant un rapport en poids (A:B) dans une plage de 1:0,5 à 1,5,
dans lequel le matériau polymère a une teneur en humidité de 7% en poids ou moins, et la teneur en humidité est un rapport entre le poids accru et le poids total mesuré lorsqu'il est laissé pendant 30 jours à une humidité relative de 80% ou plus après le moulage du matériau polymère,
dans lequel le matériau polymère a une conductivité électrique de 30 S/cm ou moins, et la conductivité électrique est une valeur mesurée par une méthode de sonde lorsqu'il est laissée pendant 30 jours à une humidité relative de 80% ou plus après le moulage du matériau polymère et la formation des terminales.

2. L'élément extérieur selon la revendication 1, dans lequel le matériau polymère est formé d'un mélange comportant 57% en poids du téréphtalate de polybutylène et de 43% en poids de la fibre de verre.

3. Une batterie de véhicule, y compris l'élément extérieur de la revendication 1.
